# EUROPÄISCHE PATENTANMELDUNG

(11) **EP 1 477 725 A2**
(43) Veröffentlichungstag der Anmeldung: **17.11.2004**
(21) Anmeldenummer: 04011169.2
(22) Anmeldetag: 11.05.2004
(51) Int. Cl.: F21S 8/00, F21V 21/30, F21V 7/00, F16C 11/10, F16M 11/10, F21Y 103/00

(54) **Wandleuchte**

(30) Priorität: 13.05.2003 DE 10321282
(71) Anmelder: TRILUX-LENZE GmbH + Co. KG, D-59759 Arnsberg (DE)
(72) Erfinder: Drees, Frank, Dipl.-Ing., 58840 Plettenberg (DE); Zucker, Ulrich, Dipl.-Ing., 35630 Ehringshausen (DE)
(74) Vertreter: Bobzien, Christoph (DE)

(57) **Zusammenfassung**

Die Erfindung betrifft eine Wandleuchte, insbesondere zur Erzeugung von indirektem Licht, mit einem Gehäuse (10) zur Befestigung an einer Wand und einer an dem Gehäuse (10) befestigten Lichtlenkungseinrichtung zur Lenkung eines von einem Leuchtmittel ausgestrahlten, vorzugsweise indirekten Lichtstroms. Um die Lichtstärkenverteilung unterhalb der Leuchte zu erhöhen erhöht wird. Dieses wird erfindungsgemäß dadurch erreicht, dass die Lichtlenkungseinrichtung drehbar an dem Gehäuse (10) gelagert ist, und dass Mittel vorgesehen sind, um den Lichtstrom beim Drehen zumindest teilweise umzulenken (Fig. 1).

## Beschreibung

Die Erfindung betrifft Wandleuchte, insbesondere zur Erzeugung von indirektem Licht, mit einem Gehäuse zur Befestigung an einer Wand und einer drehbar an dem Gehäuse befestigten Lichtlenkungseinrichtung zur Lenkung eines von einem Leuchtmittel ausgestrahlten Lichtstroms, wobei der Lichtstrom beim Drehen zumindest teilweise umgelenkt wird.

Vorzugsweise werden derartige Leuchten zur Erzeugung von indirektem Licht eingesetzt. Als indirektes Licht wird vorliegend Licht verstanden, dass von dem Leuchtmittel ausgestrahlt und über eine reflektierende Ebene, z.B. ein Reflektor oder eine Decke, reflektiert wird.

Eine solche Wandleuchte ist beispielsweise aus dem deutschen Geschmacksmuster DE 402 03 188 der Anmelderin bekannt. Bei dieser Wandleuchte nimmt das als Geräteträger ausgebildete Gehäuse die elektrischen Geräte zum Betrieb der Leuchte auf, wie z.B. Vorschaltgeräte. Die Lichtlenkungseinrichtung ist als transluzenter Hohlflügel ausgebildet, der von dem Geräteträger absteht und an dem unterseitigen Ende an dem Geräteträger befestigt ist. In dem Grund dieser als Flügel ausgebildeten Lichtlenkungseinrichtung ist ein Leuchtmittel angeordnet. Der Hohlflügel lenkt den von dem Leuchtmittel emittierten Lichtstrom an die Decke.

Die DE 1 776 911 offenbart eine Wandleuchte mit einem drehbaren Reflektor mit dem eine Leuchtstofflampe wahlweise abgeschirmt werden kann, um einen direkten und indirekten Lichtanteil zu erzeugen. Leuchten mit verstellbaren Lichtlenkungseinrichtungen sind ferner aus der DE 77 19 975, EP 0 347 700 und der DE 43 03 185 bekannt.

Derartige Wandleuchten zeichnen sich zwischenzeitlich durch Leuchtmittel mit hoher Wattage aus, die in kleinem Einbauraum untergebracht werden müssen. Dieses führt in der Leuchte zu einer nicht unerheblichen Wärmeentwicklung, die abgeleitet werden muss. Darüber hinaus gewährleisten indirekt strahlende Wandleuchten keine ausreichende Ausleuchtung in dem Bereich unterhalb der Leuchte, z. B. zur Ausleuchtung von Fluchtwegen, für deren Ausleuchtung eine Lichtstärkenverteilung von 100 Lux erforderlich ist.

Es ist deshalb Aufgabe der vorliegenden Erfindung eine Wandleuchte so weiterzuentwickeln, dass die Lichtstärkenverteilung anpassbar ist, insbesondere zur Erzielung einer höheren Lichtstärkenverteilung unterhalb der Leuchte.

Diese Aufgabe wird erfindungsgemäß dadurch gelöst, dass das die Mittel einen Schieber umfassen, der beim Drehen der Lichtlenkungseinrichtung eine Lichtdurchtrittsöffnung in dem Gehäuse wahlweise öffnet und freigibt.
Der Schieber öffnet oder schließt wahlweise eine Lichtdurchtrittsöffnung und lenkt somit mehr oder weniger Licht in den Sekundärlichtstrom um.

Auf diese Weise ist in Abhängigkeit von der Winkelstellung des Lichtlenkungselements im Verhältnis zum Gehäuse die Intensität des umgelenkten Sekundärlichtstromes bedarfsgerecht einstellbar. Beispielsweise kann dieser Schieber an dem Lichtlenkungselement vorgesehen sein und eine Lichtdurchtrittsöffnung in dem Gehäuse freigeben.

Der Sekundärlichtstrom kann entweder als direktes Licht unmittelbar in die gewünschte Richtung strahlen, z. B. auf den Boden, oder über einen Reflektor bedarfsgerecht reflektiert werden. So kann z. B. in dem Gehäuse ein Reflektor angeordnet sein, der von dem Sekundärlichtstrom angestrahlt wird. Dieser Reflektor kann auch einstellbar sein.

Erfindungsgemäß kann die Wandleuchte so ausgebildet sein, dass in dem Gehäuse ein zusätzlicher Reflektor vorgesehen ist, welcher den Sekundärlichtstrom in die gewünschte Richtung lenkt, vorzugsweise nach unten. Der Reflektor kann dabei im Gehäuse so ausgebildet sein, dass ein schachtartiger Lichtdurchgang nach unten entsteht. Dieser Durchgang hat zusätzlich einen Kamineffekt, er zieht also durch die Wärme des Leuchtmittels kühle Luft zur Kühlung der Leuchte an. Auf diese Weise kann die Leuchte im Vergleich zu einer Leuchte ohne Kamin bei gleicher Baugröße mit einer höheren Wattage ausgestattet werden.

Durch die erfindungsgemäße Ausbildung ist die Lichtlenkung bedarfsgerecht anpassbar, so dass auch für die Beleuchtung von Rettungswegen eine Lichtstärkenverteilung von 100 Lux realisierbar ist. Ferner vereinfacht das Schwenken des Lichtlenkungselements das Auswechseln der Leuchtmittel, da die Leuchtmittel im aufgeklappten Zustand einfacher zugänglich sind.

Bei Abstraktion des Erfindungsgedankens stellt die Erfindung somit eine Wandleuchte mit einem schwenkbaren Lichtlenkungselement bereit, mit der die Lichtstärkenverteilung bedarfsgerecht steuerbar und anpassbar ist.

Daneben betrifft die Erfindung eine Rastvorrichtung zur Fixierung eines schwenkbar um eine Drehachse gelagerten Lichtlenkungselements in verschiedenen Rastpositionen, insbesondere für eine Wandleuchte, wobei das Lichtlenkungselement über zumindest ein Verbindungselement mit dem Gehäuse verbindbar ist und ein durch eine Feder vorgespanntes Druckelement vorgesehen ist, das zur Realisierung der Rastung in eines oder mehrere Sacklöcher oder dergleichen einrastbar ist.

Bislang werden als Rastvorrichtungen in der Leuchtentechnik üblicherweise Kugelrasten verwendet. Kugelrasten bestehen aus einem innenseitig hohlen Gewindestift, aus dessen offenem Ende eine federnd gelagerte Druckkugel ragt. Diese Kugelrasten werden üblicherweise in dem unbeweglichen Bauteil befestigt, so z. B. in dem an dem Gehäuse montierten Verbindungselement, und wirken gegen an dem drehbaren Lichtlenkungselement vorgesehene Sacklöcher oder dergleichen.

Wie zuvor beschrieben, muss eine derartige Rastvorrichtung hohe Gewichte des Lichtlenkungselements aufnehmen. Bei der Entwicklung der vorliegenden Erfindung hat sich herausgestellt, dass Kugelrasten, die für die auftretenden Lasten der Lichtlenkungsprofile geeignet wären, in den beengten Bauräumen moderner Wandleuchten, die durchweg ein filigranes Erscheinungsbild aufweisen, nicht unterbringbar sind. Es hat sich zudem herausgestellt, dass Kugelrasten bei dem begrenzten Bauraum in den Leuchten einen zu geringen Federweg im Verhältnis zur Größe aufweisen, um die an den Bauteilen auftretenden Toleranzunterschiede auszugleichen. Der verhältnismäßig kleine Federweg bewirkt, dass die Kugelrasten schon bei geringeren Toleranzunterschieden, die z. B. durch eine unterschiedliche Lackierung der Bauteile der Leuchte auftreten können, keinen ausreichenden Anpressdruck zur Aufnahme der in derartigen Leuchten auftretenden Lasten gewährleisten. Schließlich sind Kugelrasten nur schwer justierbar.

Demzufolge soll erfindungsgemäß eine Rastvorrichtung vorgesehen werden, die eine ausreichende Kraftübertragung auf kleinstem Bauraum ermöglicht und zudem einfach auf die jeweiligen Anforderungen einstellbar ist.

Die erfindungsgemäße Rastvorrichtung ist dadurch gekennzeichnet, dass die Kraftwirkrichtung des Druckelements in Längserstreckungsrichtung des Verbindungselements wirkt.

In Einbaulage erstreckt sich das Verbindungselement quer von der Drehachse des Lichtlenkungselements. Im Verhältnis zu den aus dem Stand der Technik bekannten Kugelrasten, deren Kraftverlaufsrichtung üblicherweise in Längsrichtung zur Drehachse, seitlich versetzt von dieser verlief, wirkt die Kraftverlaufsrichtung der erfindungsgemäßen Rastvorrichtung quer zur Drehachse. Deshalb verläuft die Kraftwirkrichtung der Feder und des Druckelements der erfindungsgemäßen Rastvorrichtung ebenfalls quer zur Längserstreckungsrichtung der Drehachse bzw. des Lichtlenkungselementes. Durch diese Ausgestaltung lassen sich wesentlich höhere Drehmomente durch die Rastvorrichtung bei gleichzeitig geringer Baugröße aufnehmen. Bekannte Kugelrasten wären in dem beengt zur Verfügung stehenden Bauraum der erfindungsgemäßen Wandleuchte schwer einsetzbar, da diese zur Aufnahme der Kräfte sehr groß dimensioniert sein müssten, unschöne Öffnungen zum Durchgang der Schraubendreher für die Einstellung der Kugelrasten im Lichtlenkprofil vorgesehen werden müssten und Kugelrasten nicht die erforderlichen Federwege aufweisen würden.

Das Verbindungselement kann entweder unmittelbar zur Aufnahme der Feder und des Druckelements ausgebildet sein oder einfach als Profilblech, an dem eine Federhülse befestigbar ist. In diese angeklipste Federhülse werden dann die Druckfeder und das Druckstück eingesetzt. Bei der Montage des Verbindungselements zwischen dem Lichtlenkungselement und dem Gehäuse wird das Druckstück vorgespannt. Die Feder ist entsprechend dimensioniert, dass sie in eingebautem Zustand immer unter Vorspannung steht und den erforderlichen Anpressdruck auf das Druckstück ausübt, um die auftretenden Lasten zu tragen.

Zur Realisierung einer vordefinierten Rastung ist das Vorsehen von zumindest einem Sackloch, einer Rastnut oder einer ähnlichen Positioniervorrichtung vorteilhaft, in welchem das Druckstück in Einbaulage sitzt.

Vorzugsweise ist an dem drehbaren Lichtlenkungselement zumindest ein Kreisbogensegment ausgebildet, an dessen innerem Umfangsrand mehrere voneinander beabstandete Rastnuten oder Sacklöcher vorgesehen sind. Diese Ausbildung ermöglicht eine Rastung in verschiedenen, vordefinierten Rastsprüngen.

Die erfindungsgemäße Rastvorrichtung weist gegenüber bekannten Kugelrasten einen deutlich größeren Federweg bei geringer Baugröße auf und kann deshalb die auftretenden Toleranzunterschiede wesentlich besser kompensieren. Die bei Kugelrasten erforderliche Justage entfällt wegen der Montage im gespannten Zustand vollständig. Damit ist ein besonders ökonomischer Einbau realisierbar. Da bei kleiner Baugröße größere Lasten aufnehmbar sind, ist die erfindungsgemäße Rastvorrichtung besonders vorteilhaft für die erfindungsgemäße filigran wirkende Wandleuchte im Bereich der Kopfstücke der transluzenten Flügelprofil einsetzbar.

Ein vorteilhaftes Ausführungsbeispiel der erfindungsgemäßen Leuchte mit der daran vorgesehenen erfindungsgemäßen Rastvorrichtung ist in den Figuren dargestellt und im Folgenden beschrieben. Es zeigen:
- Figur 1: ein seitliches Schnittbild durch eine erfindungsgemäße Wandleuchte mit dem Flügelprofil in der hochgeklappten Position,
- Figur 2: die Darstellung gemäß Figur 1 mit dem Flügelprofil in einer abgeklappten Position,
- Figur 3: die Darstellung gemäß Figur 2 mit teilweise herausgenommenem Leuchtmittel,
- Figur 4: ein seitliches Schnittbild durch die Lichtlenkungseinrichtung mit einer darin angeordneten erfindungsgemäßen Rastvorrichtung in der abgeklappten Stellung,
- Figur 5: die Darstellung gemäß Figur 4 mit der Rastvorrichtung in der hochgeklappten Stellung,

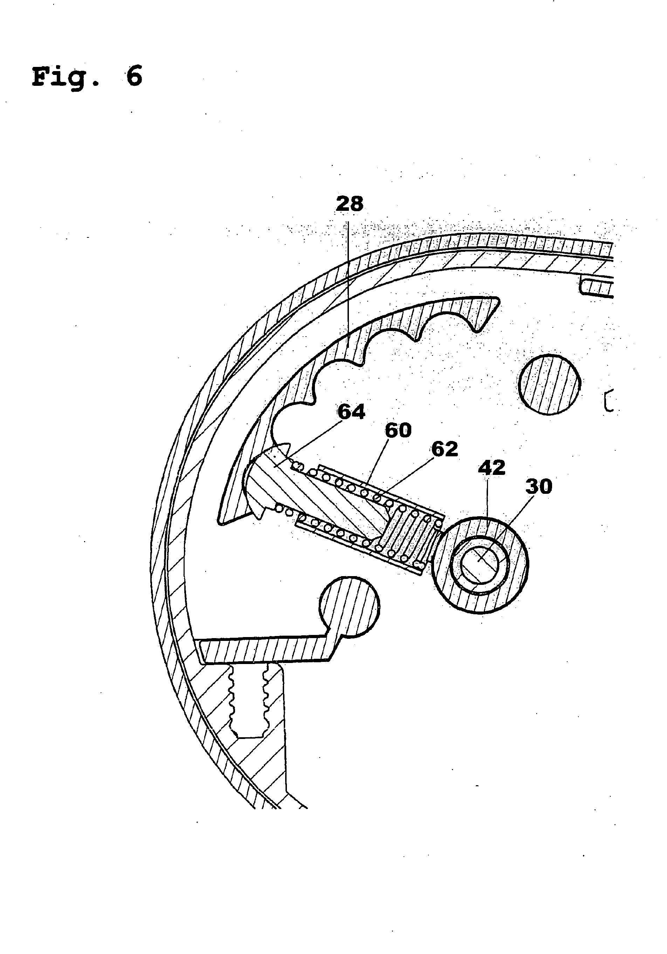

- Figur 6: eine vergrößerte Darstellung der Rastvorrichtung und
- Figur 7: eine vergrößerte perspektivische Ansicht der erfindungsgemäßen Rastvorrichtung.

Gemäß den Zeichnungen besteht die erfindungsgemäße Wandleuchte im Wesentlichen aus einem an einer Wand befestigbaren Gehäuse 10 und einem daran drehbar befestigten Flügelprofil 20, das vorliegend das Lichtlenkungselement darstellt. Die Verbindung des Flügelprofils 20 an dem Gehäuse 10 erfolgt über zwei an den beidseitigen Enden der Drehachse 30 befestigte Verbindungselemente 40, von denen in den Figuren aufgrund des Schnitts nur eines sichtbar ist.

Das Gehäuse 10 ist als im Querschnitt keilförmiges Kunststoffprofil ausgebildet, welches sich nach unten verbreitert. Im unteren Ende der Vorderseite des Gehäuses 10 ist eine Lichtdurchtrittsöffnuna 12 vorgesehen. Zudem ist innenseitig von der Lichtdurchtrittsöffnung 12 ein abgekanteter Reflektor 14 angeordnet. Am unteren Ende ist das Gehäuse 10 offen ausgebildet.

Das Flügelprofil 20 besteht im Wesentlichen aus zwei Elementen, nämlich einem im Querschnitt gesehenen im Wesentlichen tropfenförmigen Profilblech 22, an dessen spitz zulaufendem Ende ein transluzenter Kunststoffflügel 24 rastend befestigt ist. Dieser Kunststoffflügel 24 ist zweigeteilt ausgebildet.

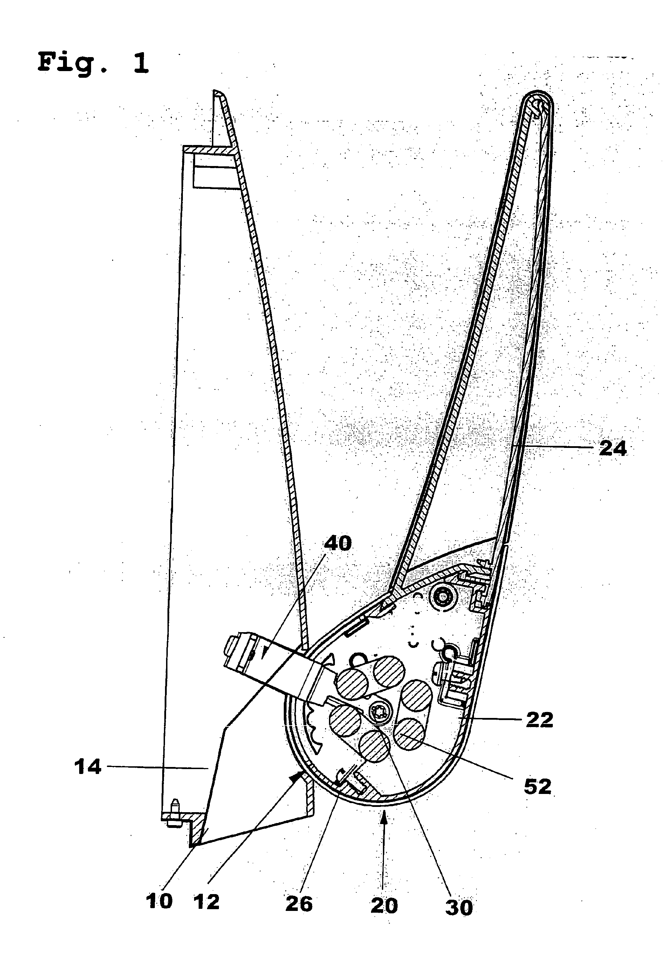

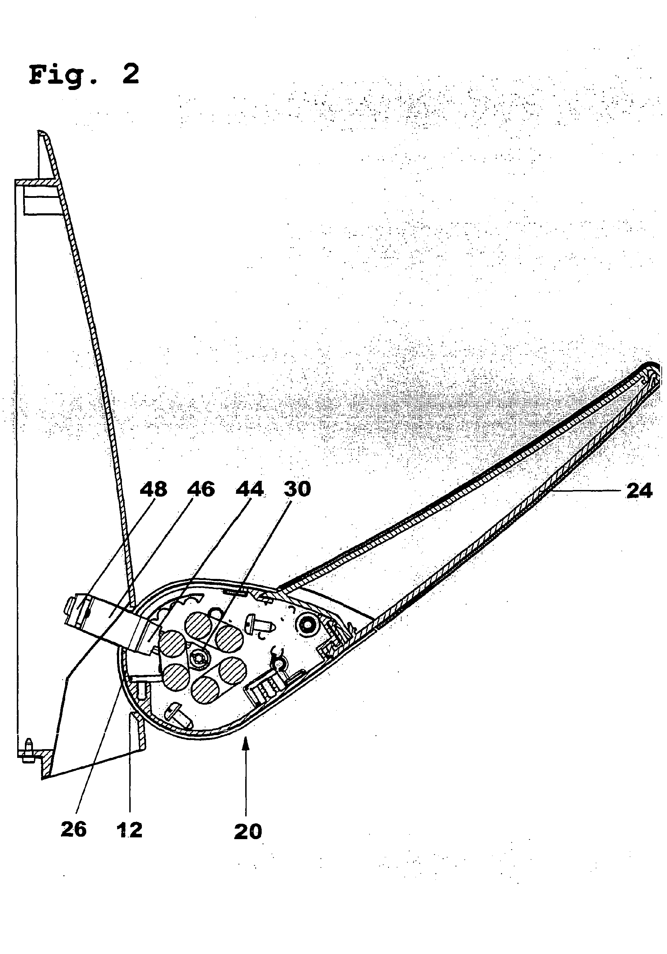

In dem Profilblech 22 ist eine in eine Fassung eingesetzte Leuchtstofflampe 50 angeordnet, von der in den Figuren 1 und 2 nur der Schnitt durch die Leuchtstoffröhren 52 sichtbar ist. Das durch diese Leuchtstofflampe 50 erzeugte Licht tritt zur Erzeugung eines indirekten Lichtstroms durch das transluzente Flügelprofil 20 nach oben aus. Die Leuchte erzeugt damit den gewünschten indirekten Lichtanteil.

In Figur 2 ist das Flügelprofil in der abgeklappten Stellung dargestellt. In dieser Stellung überdeckt der an dem Profilblech 22 ausgebildete bogenförmige Schieber 26 die Lichtdurchtrittsöffnung 12 in dem Gehäuse 10. Auf diese Weise tritt kein Lichtanteil durch die Lichtdurchtrittsöffnung 12 hindurch über den Reflektor 14 durch die Öffnung des Gehäuses 10 nach unten. Der gesamte Lichtstrom strahlt somit als indirekter Lichtanteil durch den Kunststoffflügel 24 aus.

In der Figur 1 ist das Flügelprofil 20 hingegen in der aufgeklappten Stellung dargestellt. In dieser Stellung gibt der Schieber 26 die Lichtdurchtrittsöffnung 12 in dem Gehäuse frei, so dass ein Teil des von der Leuchtstofflampe 50 erzeugten Lichtstroms über den Reflektor 14 durch die untere Gehäuseöffnung nach unten gelenkt wird. Dieser Sekundärlichtstrom leuchtet somit den Bereich unterhalb der Leuchte aus.

Demnach kann durch die Drehung des Flügelprofils 20 im Verhältnis zum Gehäuse 10 der Anteil des umgelenkten Lichtstroms bedarfsgerecht variiert werden.

Die unterseitige Öffnung in dem Gehäuse 10 zieht bei eingeschalteter Leuchtstofflampe 50 kühle Luft kaminartig an, um die Leuchtstofflampe und die Elektrik der Leuchte zu kühlen. Damit ist es möglich, die Leuchtstofflampe entsprechend kleiner auszubilden und mit höherer Wattage zu bestücken als eine Leuchte, die eine derartige kaminartige Kühlvorrichtung nicht aufweisen würde.

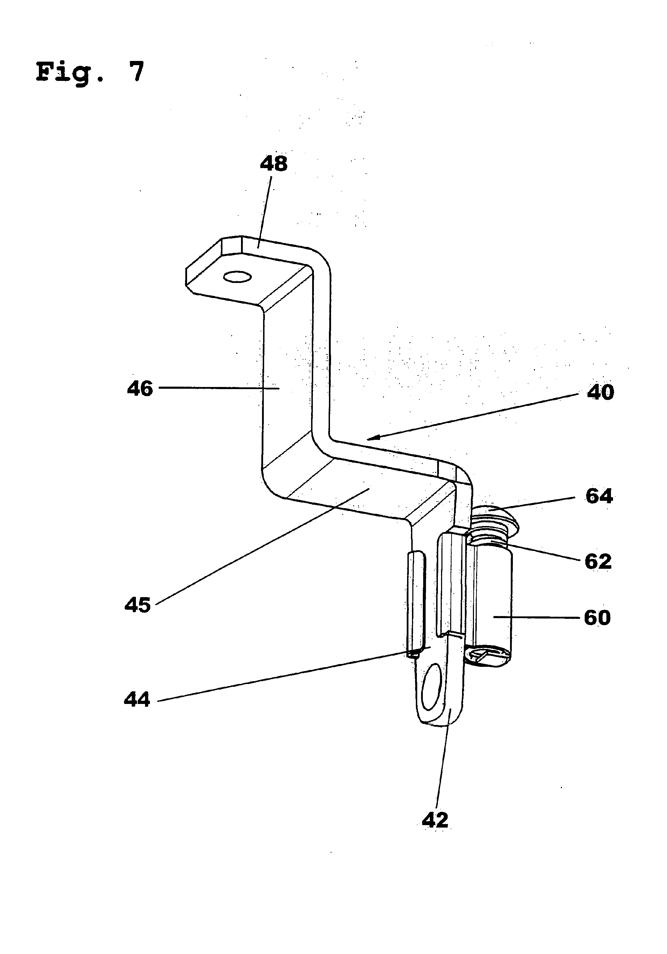

Wie zuvor beschrieben ist das Flügelprofil 20 mittels zweier Verbindungselemente 40 an dem Gehäuse 10 drehbar befestigt, die an den beiden stirnseitigen Enden im Bereich der Kopfstücke angeordnet sind und sich in Einbaulage quer zur Drehachse 30 erstrecken. Von diesen Verbindungselementen 40 ist in den Figuren 1 bis 3 aufgrund des Schnittes nur eins sichtbar. Der genaue Aufbau des Verbindungselements 40 ist am Besten aus Figur 7 zu entnehmen, in dem es vergrößert dargestellt ist. Das Verbindungselement 40 ist mit einem Drehende 42 drehbar an der Drehachse 30 des Flügelprofils 20 befestigt. Von diesem Drehende 42 erstreckt sich das Verbindungselement, welches aus einem Blech gebogen ist, in Längserstreckungsrichtung in einem ersten Längsschenkel 44. Am Ende dieses Längsschenkels 44 geht das Profilblech quer zur Längserstreckungsrichtung in Betrachtungsrichtung in Figur 1 in einen Querschenkel 45 über und verläuft nach diesem Querschenkel 45 wieder in Längserstreckungsrichtung über einen zweiten Längsschenkel 46 bis zu einem Befestigungsende 48, das an dem Gehäuse 10 angeschraubt ist. In der Seitenansicht sieht das erfindungsgemäße Verbindungselement 40 im wesentlichen als Z-förmiges Metallprofil aus, das einen weiteren Quersteg am Befestigungsende 48 aufweist.

Außenseitig, also in Richtung zum Kopfstück und in den Figuren 1 bis 3 durch das Verbindungselement abgedeckt, ist an dem Verbindungselement 40 eine Federhülse 60 aufgeklipst, die sich in Längserstreckungsrichtung an dem ersten Längsschenkel 44 erstreckt. In diese Federhülse 60 ist eine Druckfeder 62 aufgenommen, die sich an ihrem unteren Ende gegen das verschlossene Ende der Federhülse 60 abstützt und an ihrem oberen Ende ein pilzförmiges Druckelement 64 aufnimmt. Dieses Druckelement 64 wird in Einbaulage zwischen der Druckfeder 62 und einem an dem Kopfstück des Flügelprofils 20 ausgebildeten Kreisbogensegment 28 so eingeklemmt, dass der pilzförmige Kopf des Druckelements 64 in den im inneren Umfangsrand des Kreisbogensegments 28 ausgebildeten Sacklöchern sitzt. Beim Drehen des Flügelprofils 20 im Verhältnis zum Gehäuse 10 wird die Federkraft der Druckfeder 62 überwunden, so dass das Druckelement 64 rastend von einem Sackloch zum nächsten springt. Dabei wird aber jeweils der erforderliche Anpressdruck des Druckelements 64 so aufrechterhalten, dass ein unbeabsichtigtes Verdrehen des Flügelprofils 20 aufgrund des Eigengewichts vermieden wird.

Da die Wirkrichtung des Druckelements 64 quer zur Drehachse 30 verläuft, lassen sich durch die erfindungsgemäße Rastvorrichtung deutlich größere Kräfte abfangen als durch in Betrachtungsrichtung, also in Richtung der Drehachse 30 wirkende Kugelrasten.

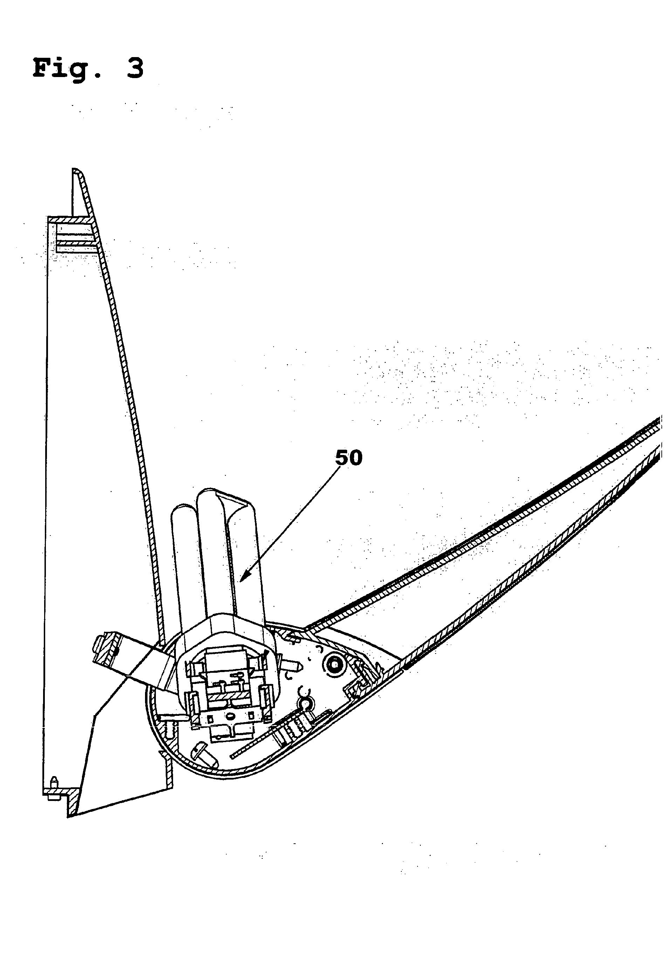

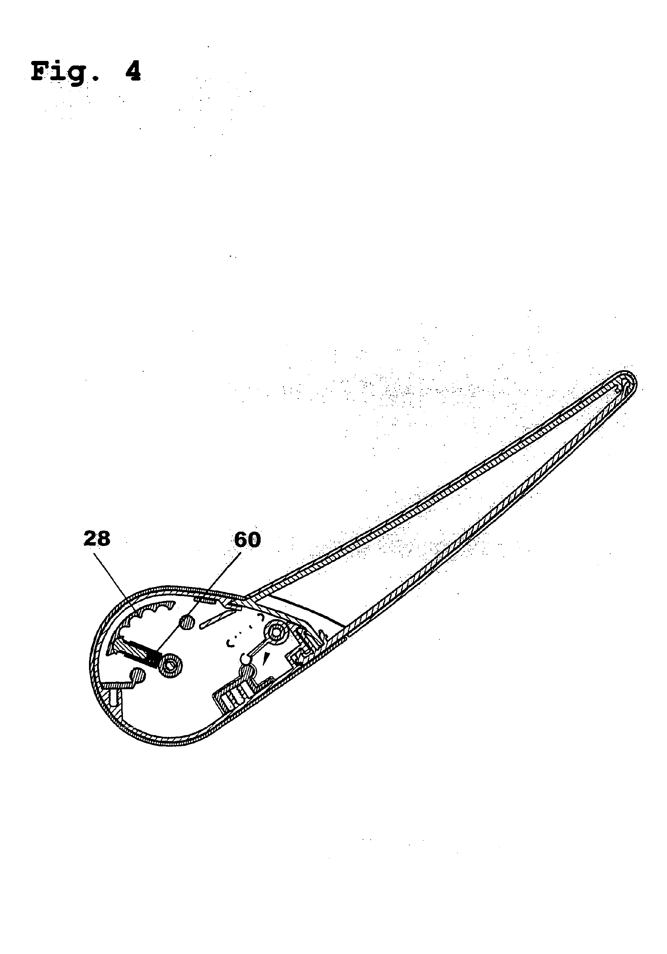

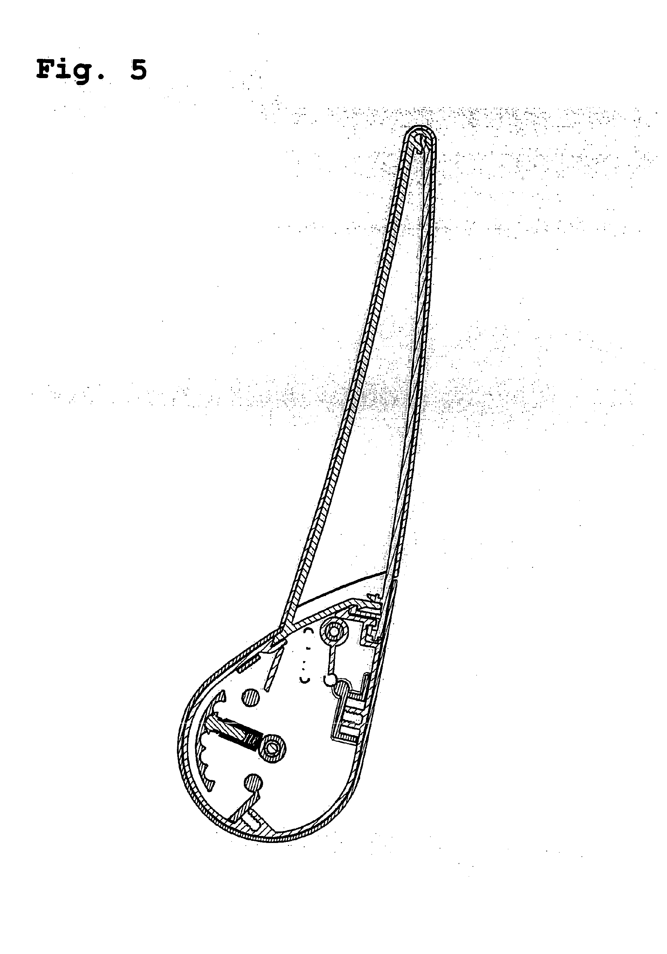

In den Figuren 4 und 5 sind die Stellungen des Druckelements 64 in der abgeklappten und der hochgeklappten Stellung des Flügelprofils dargestellt. In der abgeklappten Stellung, wie in Fig. 3 dargestellt ist, die Leuchtstofflampe 50 besonders gut zugänglich und lässt sich einfach auswechseln.

Für den Fachmann ist ersichtlich, dass die erfindungsgemäße Technik nicht nur für indirekte Wandleuchten einsetzbar ist, sondern auch bei direkten Leuchten einsetzbar ist, deren Lichtstrom verändert werden soll.

### Bezugszeichenliste

- 10: Gehäuse
- 12: Lichtdurchtrittsöffnung
- 14: Reflektor
- 20: Flügelprofil
- 22: Profilblech
- 24: Kunststoffflügel
- 26: Schieber
- 28: Kreisbogensegment
- 30: Drehachse
- 42: Drehende
- 40: Verbindungselement
- 44: erste Längsschenkel
- 45: Querschenkel
- 46: zweite Längsschenkel
- 48: Befestigungsende
- 50: Leuchtstofflampe
- 52: Leuchtstoffröhren
- 60: Federhülse
- 62: Druckfeder
- 64: Druckelement

## Patentansprüche

1. Wandleuchte, insbesondere zur Erzeugung von indirektem Licht, mit einem Gehäuse(10) zur Befestigung an einer Wand und einer drehbar an dem Gehäuse (10) befestigten Lichtlenkungseinrichtung mit Mitteln zur Lenkung eines von einem Leuchtmittel ausgestrahlten Lichtstroms, wobei der Lichtstrom beim Drehen zumindest teilweise durch die Mittel umgelenkt wird , **DADURCH GEKENNZEICHNET, dass** das die Mittel einen Schieber (26) umfassen, der beim Drehen der Lichtlenkungseinrichtung eine Lichtdurchtrittsöffnung (12) in dem Gehäuse (10) wahlweise öffnet oder schließt.

2. Wandleuchte nach Anspruch 1, **dadurch gekennzeichnet, dass** sich in Abhängigkeit von der Winkelstellung der Lichtlenkungseinrichtung im Verhältnis zum Gehäuse (10) die Umlenkung des Lichtstroms veränderbar ist.

3. Wandleuchte nach einem der vorhergehenden Ansprüche, **dadurch gekennzeichnet, dass** der umgelenkte Lichtstrom das Gehäuse (10) durchströmt.

4. Wandleuchte nach einem der vorhergehenden Ansprüche,
**dadurch gekennzeichnet, dass** in dem Gehäuse (10) ein Reflektor (14) zur Lenkung des in dieses umgelenkten Lichtstroms vorgesehen ist.

5. Rastvorrichtung zur Fixierung eines schwenkbar um eine Drehachse gelagerten Lichtlenkungselements in verschiedenen Rastpositionen, insbesondere für eine Wandleuchte nach einem der vorhergehenden Ansprüche, wobei das Lichtlenkungselement über zumindest ein Verbindungselement (40) mit einem Gehäuse (10) verbindbar ist und ein durch eine Feder vorspannbares Druckelement (64) vorgesehen ist, das zur Realisierung der Rastung in eine oder mehrere Ausnehmungen einrastbar ist, **dadurch gekennzeichnet, dass** sich die Kraftwirkrichtung des Druckelements (64) in Längserstreckungsrichtung des Verbbindungselements (40) wirkt.

6. Rastvorrichtung nach Anspruch 5, **dadurch gekennzeichnet, dass** das Verbindungselement (40) als Blechprofil ausgebildet ist, an dem eine Federhülse befestigbar ist.

7. Rastvorrichtung nach Anspruch 5 oder 6, **dadurch gekennzeichnet, dass** an der Lichtlenkungseinrichtung mindestens ein Sackloch oder eine Rastnut vorgesehen ist.

8. Rastvorrichtung nach Anspruch oder , **dadurch gekennzeichnet, dass** an der Lichtlenkungseinrichtung ein Kreisbogensegment (28) mit mehreren Rastnuten oder Sacklöchern ausgebildet ist.
